**Europäisches Patentamt**

**European Patent Office**

**Office européen des brevets**

(19)

(11) **EP 1 550 854 A2**

(12) **EUROPEAN PATENT APPLICATION**

(43) Date of publication:
**06.07.2005 Bulletin 2005/27**

(51) Int Cl.7: **G01N 21/35, G01N 21/55**

(21) Application number: **04257947.4**

(22) Date of filing: **18.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **30.12.2003 US 533392 P**

(71) Applicant: **Rohm and Haas Company
Philadelphia, Pennsylvania 19106-2399 (US)**

(72) Inventor: **Laughlin, Kenneth Bruce
Maple Glen, Pennsylvania 19002 (US)**

(74) Representative: **Buckley, Guy Julian et al
ROHM AND HAAS (UK) LTD.
European Operations Patent Department
28th Floor, City Point
One Ropemaker Street
London EC2Y 9HS (GB)**

(54) **Method for diagnosing and identifying contaminants**

(57)     An effective and reliable automated FT-IR method for diagnosing and identifying differences in composition of chemical samples as compared to corresponding standards.

## FIG. 1

Spectra of polymer X and polymer Y products

**Description**

The present invention relates to methods for evaluating quality control in chemical manufacturing processes. More particularly, the invention is directed to a spectroscopic method for diagnosing and identifying differences in composition, using a set of match scores to evaluate the closeness of a sample to its corresponding standard. The method is useful for analyzing any raw materials, products and by-products associated with any chemical manufacturing processes.

In any chemical manufacturing process, reliable detection of an incorrect or a contaminated finished chemical product is of critical concern to the manufacturer. For example, there are a number of problems associated with the manufacture of specialty chemicals, including emulsion polymers, which include incorrect products, mislabeled products, contaminated polymer products, contaminated raw materials, mischarge of one or more monomers, incorrect weight percent polymer solids, incorrect degree of neutralization, mischarge of reagents and minor additives and combinations thereof. One particularly difficult problem in the manufacture of specialty chemicals, including emulsion polymers, is to reliably, accurately and easily diagnose products having differences in composition as compared to standard products and identify the differences. Any method for diagnosing and identifying compositional differences in products and their corresponding standards must be reliable, accurate and sufficiently easy to operate by laboratory, technical and plant personnel; many of which have minimal expertise in the technical details of the method.

U.S. Patent No. 5,045,285 discloses using Fourier transform data as a subtracted signal, that is, the difference between the thin film detector cell output and input signals. Comparisons in the signal are made in the microprocessor between calculated normalized difference Fourier transform waveforms received on a path and normalized difference Fourier transform waveforms spectra data of a memory library. Unfortunately, the method does not use difference spectra to diagnose and identify compositional differences, but is used in a thin film sensor for detecting unusual gaseous components in air. Moreover, the method described is not applicable to diagnosing and identifying differences in composition between sample products and their corresponding standard products associated with any chemical manufacturing process. It is desirable, therefore, to provide a spectroscopic method for diagnosing and identifying differences in composition of samples of raw materials, products and by-products associated with any chemical manufacturing process that does not have the inherent limitations of the methods described. A desirable method includes using a set of match scores to diagnose and identify products and raw materials responsible for such differences, based on a plurality of spectral regions. It is also desirable that the method uses conventional spectroscopic equipment and that the method includes analysis of multiple spectral regions to enhance selectivity and reliability in diagnosing and identifying compositional differences. Therefore, there is provided a spectroscopic method for detecting and identifying contaminants in raw materials and finished chemical products associated with chemical manufacturing processes as compared to their respective standard raw materials and finished chemical products that is based on comparing difference spectra as compared to libraries containing a plurality of difference spectra helpful for diagnosing and identifying such differences. Such an analysis cannot not be performed using conventional difference spectral analysis methods. The method includes analysis of multiple spectral regions to enhance selectivity and reliability in detecting and identifying compositional differences.

Inventors have discovered a surprisingly effective, accurate and reliable method, based on Fourier Transform Infrared (FT-IR) spectroscopy for diagnosing and identifying composition differences, including contaminants, in raw materials and finished chemical products as compared to their corresponding standards, and using match scores to diagnose and identify compositions of matter, including contaminants, responsible for such differences. A method described in a co-pending application detects differences in composition of samples as compared to its corresponding standards. The method of the present invention is used for diagnosing and identifying differences in composition between samples and their corresponding standards. In the method of the present invention, the analysis of difference spectra is completely automated or a combination of automated analysis and visual analysis (difference spectra, spectral comparison and scenario index) or completely not automated, requiring complete user analysis. Match scores are calculated between difference spectra using a large plurality of sub-regions which are selected to cover different portions of the whole spectrum of the sample and stored standards used for diagnosis and identification. If match scores are high enough, there is high correlation between the sample and its corresponding diagnosed and identified standard or standards. Spectral subtraction having a subtraction factor of 1 is used to identify spectral differences. Using a subtraction factor of 1 removes the requirement of expert judgment in performing the spectral subtraction.

Accordingly, the invention provides a method for diagnosing and identifying differences in chemical composition between one or more samples as compared to its corresponding standards comprising the steps of:

 (a) measuring spectra for one or more samples and its corresponding standard;
 (b) calculating a difference spectrum between each sample and its corresponding standard, which is a point by point subtraction based on a specific parameter unique to the spectra;
 (c) comparing each difference spectrum with one or more libraries of difference spectra corresponding to specific scenarios, each scenario corresponding to one or more specific compositions of matter; and

(d) evaluating a set of match scores from the comparison step to identify the scenario and its corresponding one or more compositions of matter responsible for the difference in composition.

According to one embodiment of the method of the present invention, the analysis of difference spectra is completely automated or a combination of automated analysis and visual analysis (difference spectra, spectral comparison and scenario index) or completely not automated, requiring complete user analysis.

According to a separate embodiment, the invention provides an infrared spectroscopic method for diagnosing and identifying differences in chemical composition between one or more samples as compared to its corresponding standards comprising the steps of:

(a) measuring Fourier Transform Infrared spectra for one or more samples and its corresponding standard, using a technique that provides a reproducible optical path length selected from a attenuated total reflection accessory, a cuvette and plastic form;
(b) calculating a difference spectrum between each sample and its corresponding standard, which is the spectrum resulting from a point by point subtraction of absorbance values;
(c) comparing each difference spectrum with one or more libraries of difference spectra corresponding to specific scenarios, each scenario corresponding to one or more specific compositions of matter; and
(d) evaluating a set of match scores from the comparison step to identify the scenario and its corresponding one or more compositions of matter responsible for the difference in composition.

The invention also provides a method for diagnosing and identifying contaminants in chemical composition between one or more samples as compared to its corresponding standards comprising the steps of:

(a) measuring spectra for one or more samples and its corresponding standard;
(b) calculating a difference spectrum between each sample and its corresponding standard, which is a point by point subtraction based on a specific parameter unique to the spectra;
(c) comparing each difference spectrum with one or more libraries of difference spectra corresponding to specific contaminant scenarios, each scenario corresponding to one or more specific contaminants; and
(d) evaluating a set of match scores from the comparison step to identify the scenario and its corresponding one or more contaminants responsible for the difference in composition.

According to one embodiment, the invention also provides an automated method for detecting differences in chemical composition between one or more samples as compared to its corresponding standards.

The invention provides also provides a method for detecting differences in chemical composition between one or more samples as compared to its corresponding standards comprising the step of: utilizing principle component analysis (PCA).

As used herein, a sample is provided and analyzed from any stage of a chemical manufacturing process and refers to any composition of matter related to the process. Typical samples include, but are not limited to, raw materials, reactants, additives, intermediates, by-products, products and combinations thereof. A standard (also referred to as a reference) refers to any composition of matter, including combinations of two or more compositions of matter, the sample is compared against. Difference spectra are calculated between each sample and its corresponding standard, which is the spectrum resulting from a point by point subtraction of a specific parameter unique for the spectra. For example when using IR spectra, absorbance values are used in the point by point subtraction.

Any spectroscopic method is usefully employed in accordance with the invention. Suitable spectroscopic methods include, but are not limited to for example, near infrared (IR) spectroscopy, mid IR spectroscopy, far IR spectroscopy, surface IR spectroscopy, X-ray spectroscopy, Raman spectroscopy, ultraviolet-visible (UV-vis) spectroscopy, optical spectroscopy, acoustic spectroscopy, ellipsommetry, nuclear magnetic resonance spectroscopy (NMR), magnetic resonance spectroscopy (MRS), mass spectrometry (MS), gas chromatography, liquid chromatography, solid chromatography and combinations thereof.

Sample spectra are measured using any conventional and/or commercially available instruments and hardware to hold the sample. In the case of the hardware used to measure spectra, any hardware and technique for measuring spectra is usefully employed in accordance with the invention so long as they provide reproducible absolute spectral intensity. When FT-IR spectroscopy is used according to the invention, samples are measured using hardware including, but not limited to for example, a cuvette, a plastic form (used for films and liquids) and a diamond attenuated total reflectance (ATR) accessory, which provide highly reproducible optical path lengths. When UV-vis spectroscopy is used, the hardware employed for holding the sample and standards is, for example, a cuvette. For NMR spectroscopy, the hardware used to hold the samples and standards is a quartz tube.

According to one embodiment of the invention, Fourier Transform infrared (FT-IR) spectra of samples are measured using a diamond attenuated total reflectance (ATR) accessory (a 3-bounce model DurasampIIR™, formerly available from SensIR™ technologies, now available from Smiths Detection). Any conventional IR spectrometers, including FT-IR spectrometers, are usefully employed in accordance with the invention. Suitable FT-IR spectrometers include, but are not limited to for example, those available from Mattson™ Instruments: Mattson Genesis I™, Mattson Genesis II™, Mattson Galaxy™; Nicolet™ Corporation, Nicolet Avatar™ and Thermoelectron™ instruments. An automated computer program is used to collect FT-IR spectra (OMNIC™ macro) of both samples and corresponding standards. The standard spectra are stored in a spectral library for automatic retrieval and comparison with each respective sample spectrum measured, analyzed and evaluated. Any suitable computer program is used in accordance with the invention. One suitable program includes, but is not limited to for example, a visual basic program. The computer program is used to calculate a match score for each sample and its corresponding standard for comparison. The program is a copyrighted program developed by Rohm and Haas™ Company. Match scores are used for simplicity in comparing a sample spectrum with its corresponding standard spectrum. A different computer program (an Excel™ macro) is used to control chart the match scores (see Examples), determine pass/fail of each sample compared to its corresponding standard and to display, including store, each result.

The method of the invention provides diagnosis and identification of any spectral differences, relating to composition differences, between a sample and its corresponding standard based on analysis of difference spectra. A difference spectrum is a point by point subtraction of sample from a standard. Each difference spectrum is calculated using a subtraction factor of 1. Spectroscopists typically calculate a difference spectrum using the formula:

$$\text{Difference spectrum} = \text{sample spectrum} - (\text{factor}) * (\text{reference spectrum})$$

where the subtraction factor is varied to provide a difference spectrum which is subjectively judged by person of skill to best represent the chemical difference in the spectra. The subtraction factor set to a fixed value of 1 used in the method of the present invention offers an advantage in diagnosing and identifying compositional difference in a sample as compared to its corresponding standard that results from any number of scenarios, including for example one or more contaminants, because it removes subjective and expert judgment in the choice of the subtraction factor. The method also provides the identity of any one or more compositions of mater, including one or more contaminants by comparing each difference spectrum versus libraries of difference spectra corresponding to one or more compositions of matter likely responsible for such differences in composition. Difference spectral libraries are designed to describe specific problems (termed scenarios) associated with a particular chemical manufacturing process. Automated programs are used for diagnosing product failures, which include a Visual Basic program (referred to as Diagnose.exe or Diagnose) and a spectral library relevant to common scenarios in the process. A scenario index is calculated by the program to indicate the likelihood that the specific scenario has occurred, based on the quality of spectral matching.

Match scores are calculated by a number of well known algorithms, including, but not limited to for example, the four algorithms shown below. In each case, the calculated value provides a quantitative measure of similarity between two spectra. For example, with the Correlation Coefficient, a value of 1 indicates a perfect match, while imperfect matches yield values less than 1.

$$\text{"Correlation"} \quad \frac{\Sigma_{i=1}^{N} (\text{Unkn}_i - \text{Unkn}_{ave}) * (\text{Lib}_i - \text{Lib}_{ave})^2}{(\Sigma_{i=1}^{N} (\text{Unkn}_i - \text{Unkn}_{ave})^2 * \Sigma_{i=1}^{N} (\text{Lib}_i - \text{Lib}_{ave})^2)^{0.5}}$$

$$\text{"Euclidean Distance"} \quad \sqrt{2 * \sqrt{1 - \frac{\Sigma_{i=1}^{N} (\text{Unkn}_i * \text{Lib}_i)}{\Sigma_{i=1}^{N} (\text{Unkn}_i)^2 * \Sigma_{i=1}^{N} (\text{Lib}_i)^2}}}$$

$$\text{Least Squares} \quad \Sigma_{i=1}^{N} (\text{Unkn}_i - \text{Lib}_i)^2 / N$$

$$\text{Absolute Value} \quad \Sigma_{i=1}^{N} |\text{Unkn}_i - \text{Lib}_i| / N$$

For these (and other) algorithms, the spectrum is represented as an array of N absorbance values over the subregion of interest. The spectrum of the sample to be analyzed is referred to as an "Unknown", while the spectrum to which it is being compared is referred to as "Library", namely one of a plurality of spectra in a spectral library or database.

There are a number of advantages of using the method of the present invention. By using more than one spectral subregion in the method of the invention, a significant increase in the sensitivity is provided, which is reflected in a reliable and more accurate pass/fail determination. Moreover, spectral variations outside the subregions do not affect the scores of normal measurements. Thus, any spectral (and compositional) changes due to one or more compositions of matter, including one or more contaminants for example, absorbing strongly in this subregion will cause a greater drop in the match score relative to normal variability associated with the measurement. Infrared spectroscopy, including FT-IR spectroscopy, is a universal techniques for analyzing chemical composition. Conventional FT-IR equipment are used, which are durable, reliable equipment to use in a chemical plant environment. The method is easy to use and can be rapidly applied and implemented, especially by persons having no skill in chemical composition analysis. The chemical, computer and spectroscopic hardware and software is quickly setup and implemented for use. The method is sensitive enough to effective diagnose and identify changes in chemical composition between a sample and its corresponding standard, including changes due to contamination. The pass/fail limit is adjustable to achieve the required sensitivity for analysis and evaluation of each sample. The method is an excellent means of evaluating QC for a chemical product and is universally used for all types of chemical samples.

A method described in a co-pending application detects differences in composition of samples as compared to its corresponding standards. Any number of subregions can be used to calculate match scores according to the method. Typically, the number of subregions is determined from potentially useful regions of a spectra used for analysis in the method. For example, using mid IR spectroscopy, between 2 and 100 subregions are used. Setting pass/fail (P/F) limits for sample is a heuristically determined parameter. According to one embodiment, P/F limits are based on historically measured variability of the match scores. Pass/fail limits are determined when statistically different match scores are calculated for a sample as compared to its corresponding standard. Suitable pass/fail limits include, but are not limited to for example, between three times the standard deviation ($3\sigma$) and $30\sigma$. For example, P/F limits are displayed in the form of a control chart (see Examples). According to one embodiment of the method, the pass/fail limit is based on a non-Gaussian match score distribution. According to a separate embodiment, the pass/fail limit is based on a Gaussian match score distribution.

The method of the present invention is useful for detecting differences in composition due to one or more compositions of matter in a sample as compared to its corresponding standard that result from one or more problems associated with the manufacture of chemical products, including emulsion polymers. The one or more compositions of matter responsible for such differences include, but are not limited to for example, incorrect polymer products, mislabeled products, contaminated polymer products, contaminated raw materials, raw materials mischarges (incorrect exchange of one or more raw materials for another), mischarges of one or more monomers (incorrect exchange of one or more monomers for another), incorrect weight percent polymer solids, incorrect degree of neutralization, mischarges of reagents and minor additives and combinations thereof. Any method for detecting differences in composition between one or more samples and their respective standards must be reliable and sufficiently easy to operate by laboratory, technical and plant personnel.

According to one embodiment of the invention, the ATR FT-IR method of the invention is a quality control test of a product prepared in batch quantities from a specific chemical manufacturing process. The method verifies the composition of the product compared to reference standards to confirm quality of the product or to detect and identify contaminants and other problems associated with the process. The method is complementary to other conventional quality control tests of the product.

For example, the FT-IR method is used as a quality control test to check emulsion products for consistency of chemical composition. In many instances the emulsion product batches pass the quality control test. The term pass refers to the fact that ATR FT-IR spectra of sample batches consistently correlate (from calculated match scores) with standard or normal product spectra as observed when difference spectra are calculated. In certain instances, however, product batches fail the quality control test and quality control and technical personnel are faced with decisions on how to handle the failed product. The FT-IR method of the invention often provides such personnel a rapid and accurate assessment of the likely scenarios including contaminants and other problems associated with the process.

Scenarios are problems associated with a particular chemical manufacturing process based on experiences collected over a period of time diagnosing product failures at chemical manufacturing facilities. Typical scenarios for emulsion polymer products include, but are not limited to for example: mislabeled product, product contaminated with another product, monomer mischarge (incorrect exchange of one monomer for another), incorrect weight percentage of polymer solids, incorrect degree of neutralization, mischarge of an additive including for example solvents, base, soaps, surfactants and other additives.

The method of the invention provides quality control analysis of emulsion batches and diagnosis of process scenarios for emulsion batches using an automated computer program (Diagnose.exe) that compares difference spectra with one or more libraries of reference difference spectra.

According to one embodiment, the method is used to detect, identify and diagnose a mislabeled polymer product. This scenario is conceptually the simplest to diagnose. The suspected sample spectrum is searched and compared versus the library of all other spectra manufactured at the plant. If another product gives a significantly better match than the intended product, then mislabeling is likely. The product library spectra at the given plant are available as a part of normal operation of the FTIR QC test method.

The match score is calculated for the region from 670-1800 cm-1, and the Scenario Index is (1 - CC intended product) / (1 - CC best match) where the correlation coefficients (CC) are limited to a maximum of 0.999 to prevent high indexes in cases where the intended product has a high match score.

According to a separate embodiment, the method is used to identify and diagnose a polymer product A contaminated with polymer product B. For this scenario, a good spectral match is expected between the difference spectrum (contaminated product A minus pure product A) when compared to the library difference spectrum (pure product B minus pure product A). The relative intensity of the two difference spectra is related to the extent of contamination. Note that this analysis work wells for the case where product A at the correct wt% solids has been mixed with product B at the correct wt% solids. If the products have been diluted or adjusted in any way, this will degrade the spectral match. In this case, the analysis based on dried film spectra (*vide infra*) will yield superior results.

Difference spectra of product library spectra at the given plant minus the intended product are not stored. The "Diagnose.exe" program calculates these difference spectra each time the program is run. The match score is calculated from 670-1300 cm-1, and the Scenario Index is calculated as $1 / (2 * (1 - CC))$.

According to a separate embodiment, the method is used to identify and diagnose a monomer mischarge in a polymer product. For this scenario, a good spectral match is expected between the difference spectrum (contaminated product A minus pure product A) when compared to the homopolymer difference spectrum (pure Homopolymer X minus pure Homopolymer Y). This analysis also often works better for dried film spectra.

The homopolymer reference spectra were collected by measuring dry films cast from solutions directly onto the diamond ATR. Difference spectra are calculated in all combinations in both directions. Homopolymers currently included in the library are poly(butyl acrylate) pBA, poly(ethyl acrylate) pEA, poly(ethylhexyl acrylate) pEHA, poly(methyl methacrylate) pMMA, poly(butyl methacrylate) pBMA, poly(lauryl acrylate) pLMA, poly(vinyl acetate) pVAc, polystyrene pSty, and polybutadiene pBD. The match score is calculated from 670-1300 cm-1, and the Scenario Index is calculated as $1 / (1 - CC)$.

According to a separate embodiment, the method is used to identify and diagnose an incorrect weight percentage of solids in a polymer product. For this scenario, a good spectral match is expected between the difference spectrum (failed product A minus pure product A) when compared to the difference spectrum (pure Water minus pure Product A) for diluted product or (pure Product A minus pure Water) for product with high solids. The difference spectrum for diluted product will show positive water peaks and negative polymer peaks. The method works much better if the water reference spectrum is measured on the same instrument as the samples being tested.

The match score is calculated from 670-1800 cm-1, and the Scenario Index is calculated as $1 / (5 * (1 - CC))$.

According to a separate embodiment, the method is used to identify and diagnose an incorrect degree of neutralization and/or acid content in a polymer product. For this scenario, a good spectral match is expected between the difference spectrum (failed product A minus standard product A) when compared to the difference spectra of acid polymers at different pH. For example, if the polymer contains poly(acrylic acid) or acrylic acid (pAA or AA), a good match is found with the difference spectrum (pure pAA at pH = 9 minus pure pAA at pH = 5) for higher degree of neutralization, or the opposite for lower degree of neutralization. Different acid polymers and neutralizers are included in the library because the spectra are somewhat different. The acid salts typically show a pair of strong peaks at 1550-1590 cm-1 and 1400-1420 cm-1. Spectra of pure acid salts are also included to give a better match for scenarios where too much or too little total acid is present.

The reference difference spectra of acids were measured at a concentration 5wt% in water, at high pH minus low pH, neutralized by NaOH, $NH_3$ and ethanolamine; Acids include pAA, Tamol 731 (maleic anhydride / diisobutylene), pMAA, benzoic acid, acetic acid. Spectra of the fully neutralized acid salts are also included, measured at a concentration of 5wt% in water minus pure water to subtract out water peaks.

The match score is calculated from 1250-1650 cm-1, and the Scenario Index is calculated as $1 / (2 * (1 - CC))$.

According to a separate embodiment, the method is used to identify and detect mischarge of a minor additive in a polymer product. For this scenario, we expect a good spectral match between the difference spectrum (failed product A minus pure product A) when compared to the reference spectra of additives, such as solvents, surfactants, and performance additives. In this case, difference spectra for the library references are not calculated, and the method relies on the pure minor additive spectrum showing up in the difference spectrum.

An exemplary library consists of, but is not limited to, the following spectra:

Solvents: Ethylene glycol, propylene glycol, Butylcarbitol, 2-Pyrrolidone;
Surfactants: Triton™ X-405, Triton™ X-45, Triton™ XQS-20, and Triton™ XN-45S;

Miscellaneous additives: $NaHCO_3$, $Na_2CO_3$, Silicone oil, polyethylene glycol PEG, Tackifier, $NH_4Cl$, Ammonium persulfate (unheated and decomposed), Aqueous ammonia spectrum, Acetic acid, pAA (protonated form), Ethanolamine.

All of the reference spectra were measured as solutions in water (5 wt%), followed by subtraction of pure water to try to eliminate the water peaks. This approach is important because hydration by water can significantly shift the spectra. Ionic surfactant spectra were measured at both high and low pH.

The match score is calculated from 900-1350 cm-1, and the Scenario Index is calculated as 1 / (2 * (1 - CC)).

It is contemplated that comparing difference spectra with other difference spectra can be used in the method of the invention, in spite of any conceptually inconsistencies. It is further contemplated, moreover, that such an inconsistency can be resolved. However, it is difficult to construct libraries of pure additive spectra where the spectra match what is found in a typical material. From the examples below, it was discovered that this approach works well in many cases, because the additive spectra are often particularly intense.

The search spectrum and libraries are summarized in Table 1.

Table 1.

| Scenarios, search spectra and libraries in Diagnose program™. | | |
|---|---|---|
| Scenario | Spectrum to be searched | Spectral Library |
| Mislabeled product | Failed Product spectrum | Product spectra at plant |
| Product A contaminated with product B | Failed product - Good product difference spectrum | Pure product B - Pure product A at plant |
| Monomer discharge | | Homopolymer X - Homopolymer Y |
| Incorrect wt% solids | | Pure product A - Pure water |
| Incorrect degree of neutralization or acid content | | Difference spectrum of acid polymers at high pH - low pH ; also spectra of acid salts |
| Mischarge of a minor additive | | Reference spectra of additives |

The diagnosing computer program is compiled using any conventional and commercially available computer program software. The program "Diagnose™.exe" was written in Visual Basic using the Nicolet™ Macros/Pro software to display and manipulate the spectra. It consists of a main page "form", to select the sample and reference spectra and click on the various scenario buttons, and a separate "form" called by the main page to evaluate each scenario.

A user inputs information to the program including, but not limited to, a product code, a standard FT-IR spectrum, and choice of a sample FT-IR spectrum to be analyzed and diagnosed. The program calculates a "Scenario Index" based on the spectral match quality, to indicate the likelihood that the scenario occurred. A scenario index of 0-5 indicates the scenario is unlikely, 5-10 indicates the scenario is possible, and > 10 indicates the scenario is likely. A summary of all of the scenario indexes can be displayed with the "Display Summary" button.

Any suitable chemical products are usefully analyzed and diagnosed using the method of the invention and any corresponding chemical products, reactants, contaminants, missing reactants, mischarged reactants and combinations thereof are identified using the method of the present invention. Suitable products analyzed by the method of the invention include, but are not limited to, vinyl polymers such as polystyrene, polystyrene copolymers polyvinylacetate, polyvinylpyridines, polyvinylamines, polyvinylamides, polyvinyl ethers, condensation polymers such as polyesters and polyurethanes, polyethylenically unsaturated polymers such as polyethylene, polypropylene, poly(meth)acrylates, poly(meth)acrylate copolymers, polyalkyl(meth)acylates, polyalkyl(meth)acrylate copolymers, polyhydroxyakyl (meth)acrylates, polyacrylonitrile, polyacrylonitrile copolymers, polyacrylamide, poly(meth)acrylamide and poly(meth) acrylamide copolymers. Other suitable examples of water insoluble polymers include cross-linked polymers of the polymers listed.

Water insoluble acrylic polymers useful in the invention are prepared by conventional polymerization techniques including sequential emulsion polymerization. Dispersions of the latex polymer particles are prepared according to processes including those disclosed in U.S. Patent Nos. 4,427,836; 4,469,825; 4,594,363; 4,677,003; 4,920,160; and 4,970,241. The latex polymer particles may also be prepared, for example, by polymerization techniques disclosed in European Patent Applications EP 0 267 726; EP 0 331 421; EP 0 915 108 and U.S. Patent Nos. 4,910,229; 5,157,084; 5,663,213 and 6,384,104.

As used herein, the term "(meth)acrylic" refers to either the corresponding acrylic or methacrylic acid and derivatives; similarly, the term "alkyl (meth)acrylate" refers to either the corresponding acrylate or methacrylate ester.

Some embodiments of the invention are described in detail in the following Examples. The Examples illustrate where the where the method using the Diagnose program was used to diagnose various problems in polymer products. The Example demonstrate advantages of the method of the invention. The product library spectra, which are used for diagnosing scenarios 1 and 2, are a polymer plant QC lab library spectra of commercial polymer products.

Example 1 Polymer X mislabeled as Polymer Y

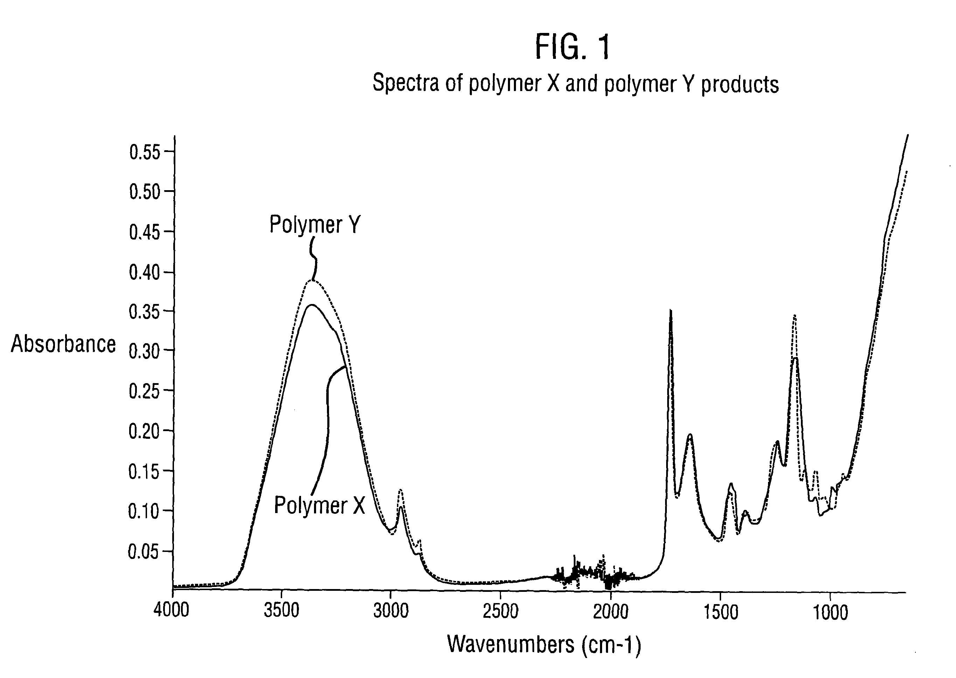

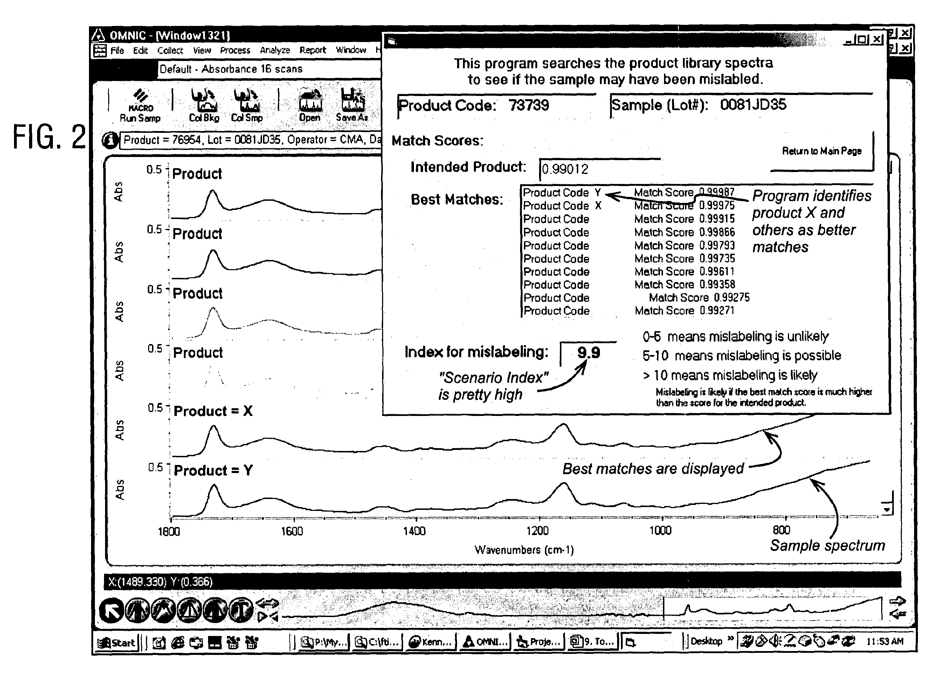

Figure 1 shows the spectra of the two polymer products, X and Y. The spectra are similar, but clearly and reproducibly different. Figure 2 shows the screen if the X spectrum is selected by the user as the reference, a spectrum of Y is chosen as the sample, and the "Mislabeled Product??" button is clicked. The scenario index is pretty high (9.9), indicating that it is possible or likely that the product is mislabeled. Note that the correct product X is only the 2nd best match, although the top match scores are close and they are all much better than the intended product Y.

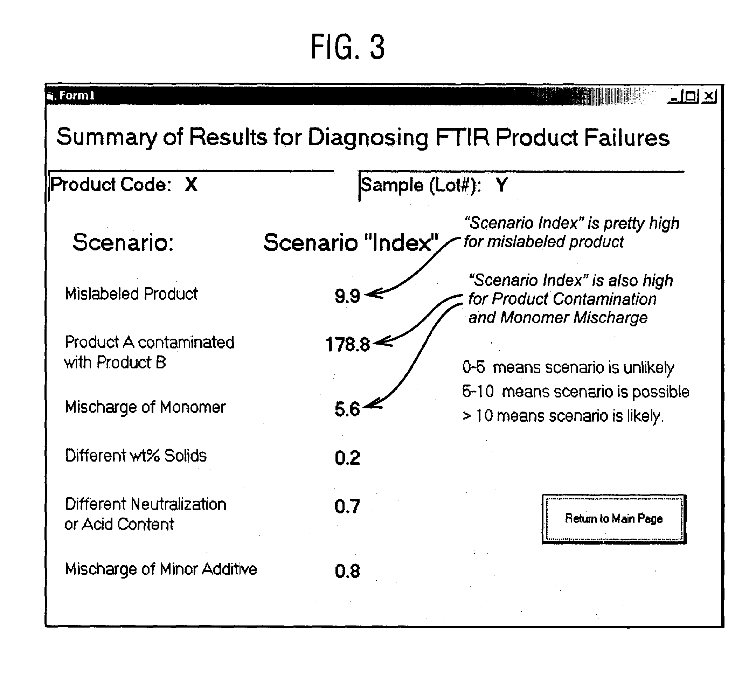

Figure 3 shows the screen if the X spectrum is selected by the user as the reference, a spectrum of Y is chosen as the sample, and the "Mislabeled Product??" button is clicked. The scenario index is pretty high (9.9), indicating that it is possible or likely that the product is mislabeled. Note that the correct Figure 2 shows the screen if the X spectrum is selected by the user as the reference, a spectrum of Y is chosen as the sample, and the "Mislabeled Product??" button is clicked. The scenario index is pretty high (9.9), indicating that it is possible or likely that the product is mislabeled. Note that the correct product X is only the 2nd best match, although the top match scores are close and they are all much better than the intended product Y.

Figure 3 also shows the results if we click all of the scenario buttons and then display the summary page. Note that "Product X contaminated with Product B" has a very high Scenario Index, which makes perfect sense because a mislabeled product could also be viewed as 100% contamination. The Index for mischarge of a monomer is also fairly high, because the primary difference between polymers X and Y is the exchange of methyl methacrylate (MMA) for butyl acrylate (BA).

Example 2 Polymer X contaminated with Polymer Y at a level of 10%

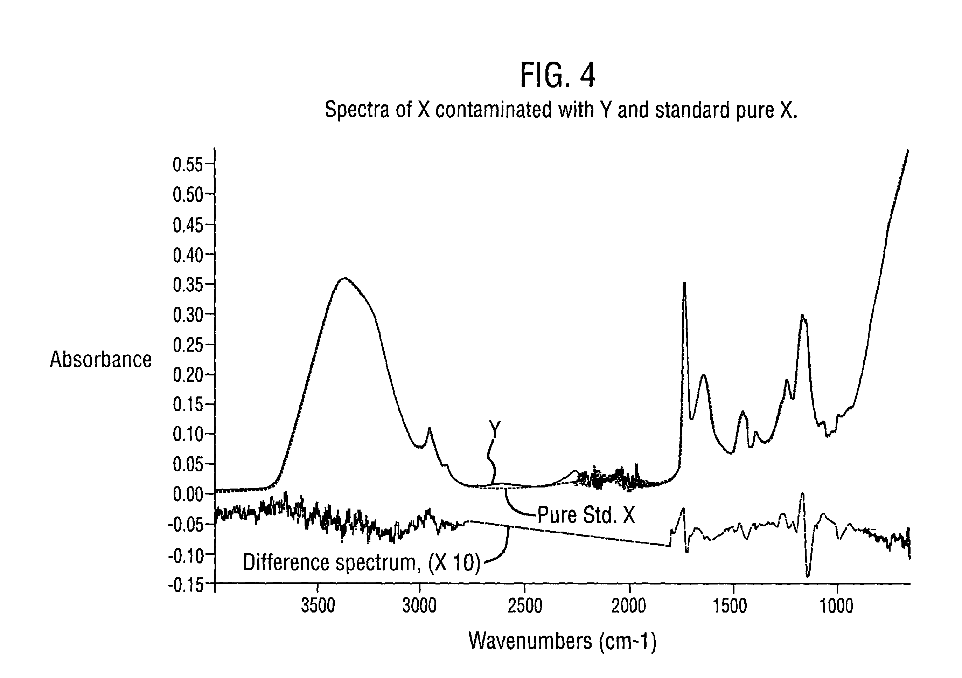

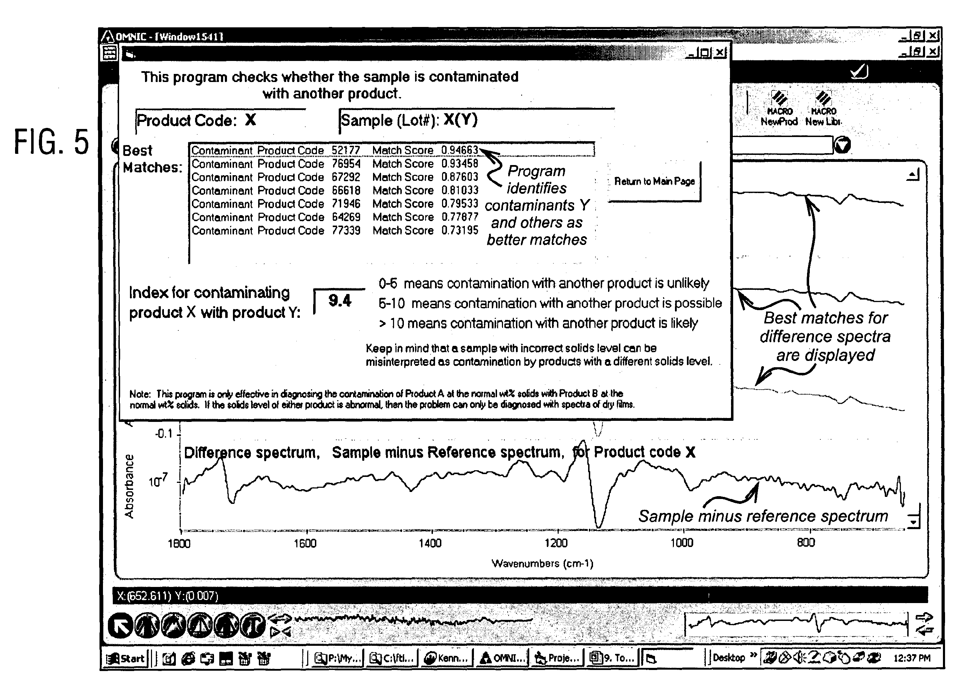

For this study, a sample of polymer X was blended with polymer Y to simulate product cross-contamination. The spectra are shown in Figures 4. The spectra of the contaminated and reference material overlap very closely. If these two spectra are entered into the program, and the button "Product A contaminated with Product B" is clicked, the screen in Figure 5 is obtained. The scenario index is fairly high (9.4), and the correct contaminant is the 2nd best match. The best match is also an adhesive which is primarily pBA, similar to polymer Y.

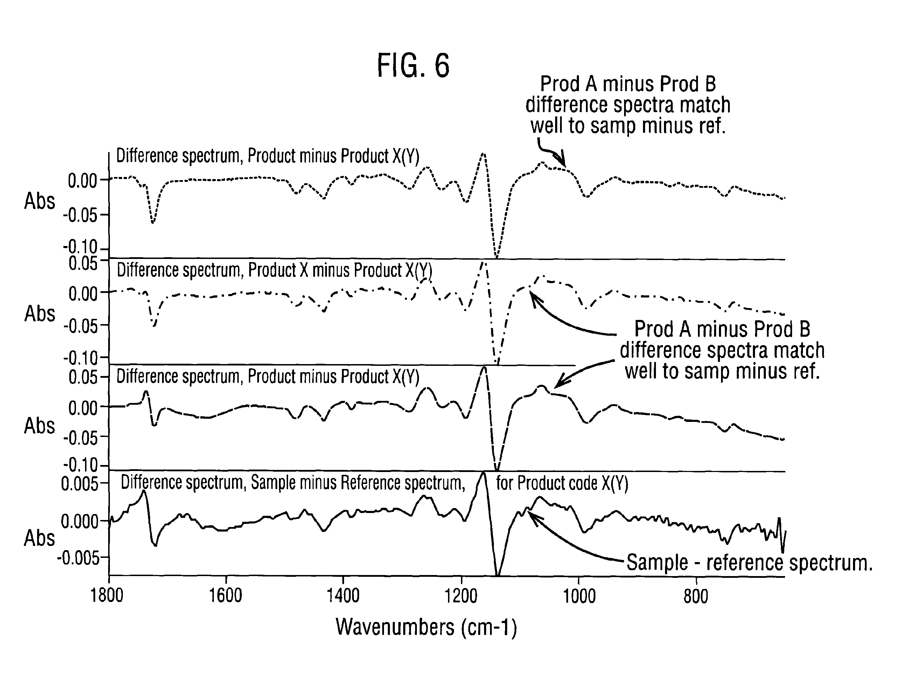

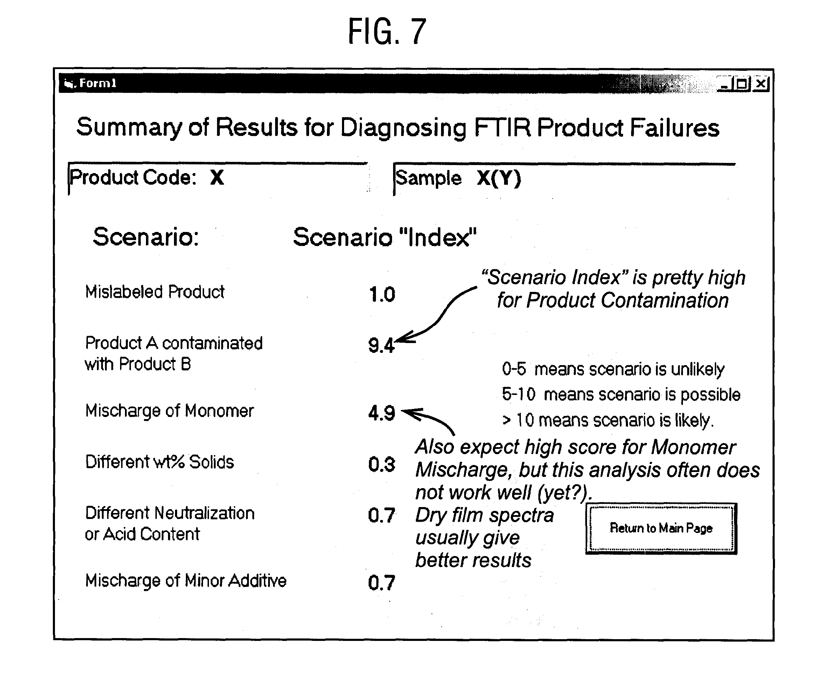

The difference spectrum of sample minus reference as well as the library difference spectra are shown in the OMNIC™ screen in the back, and can be examined by minimizing the Visual Basic window. The spectra are shown in Figure 6. Although the sample - reference spectrum is somewhat noisy, the spectral features are easily observed and the match with the difference spectrum of pure product Y minus pure product X is quite good. The summary page, in Figure 7, shows that the "Product A contaminated with Product B" scenario is the only likely one. The match with the monomer mischarge scenario is poorer than expected, just below the cutoff for "possible".

Example 3 Polymer prepared with impure monomer

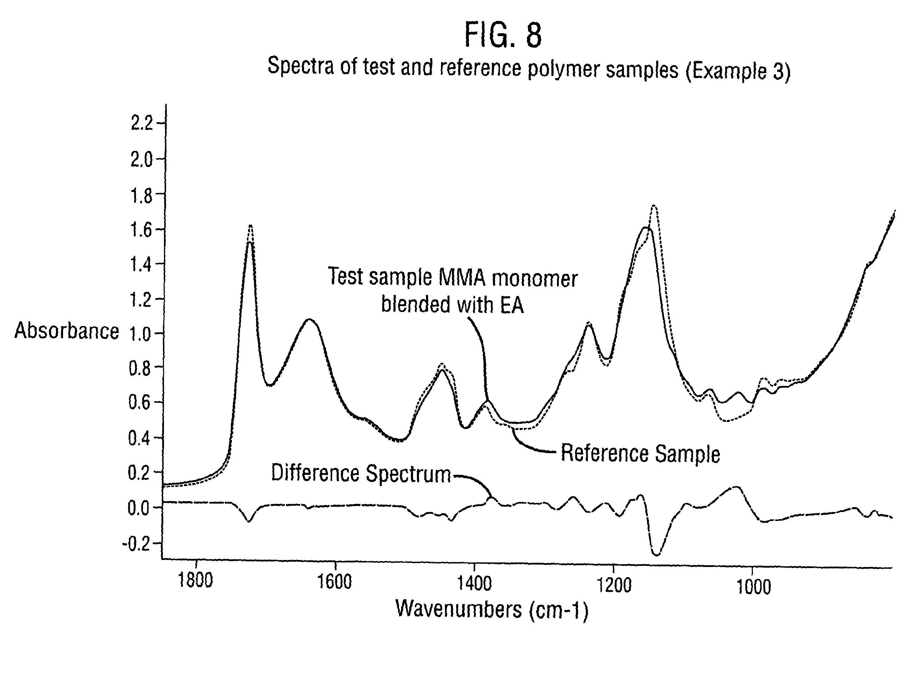

Figure 8 shows the spectra of two emulsion polymers, where the monomer mixture was diluted with another monomer to simulate contamination.

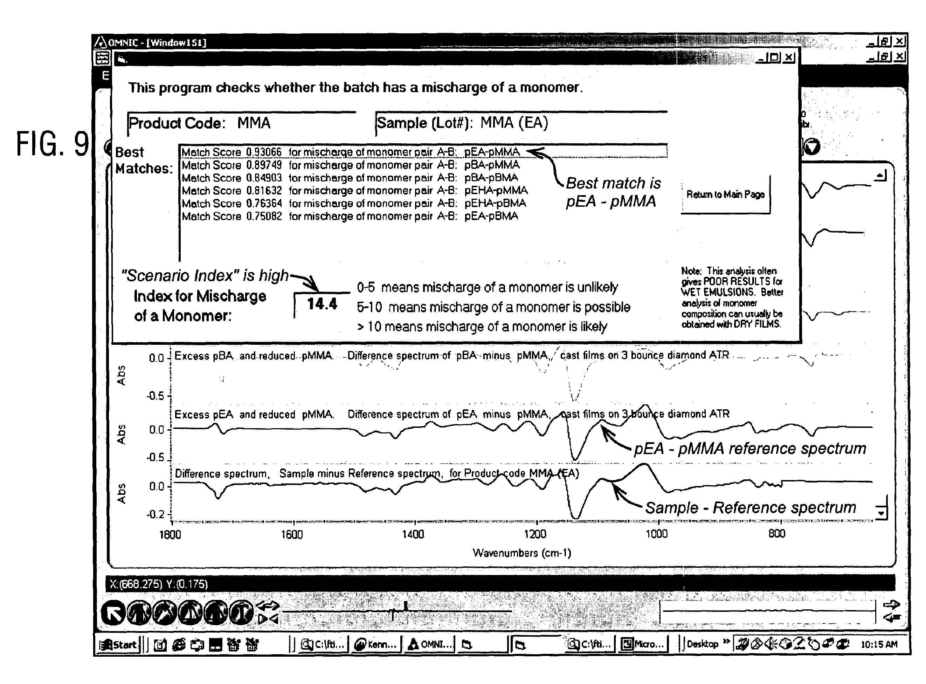

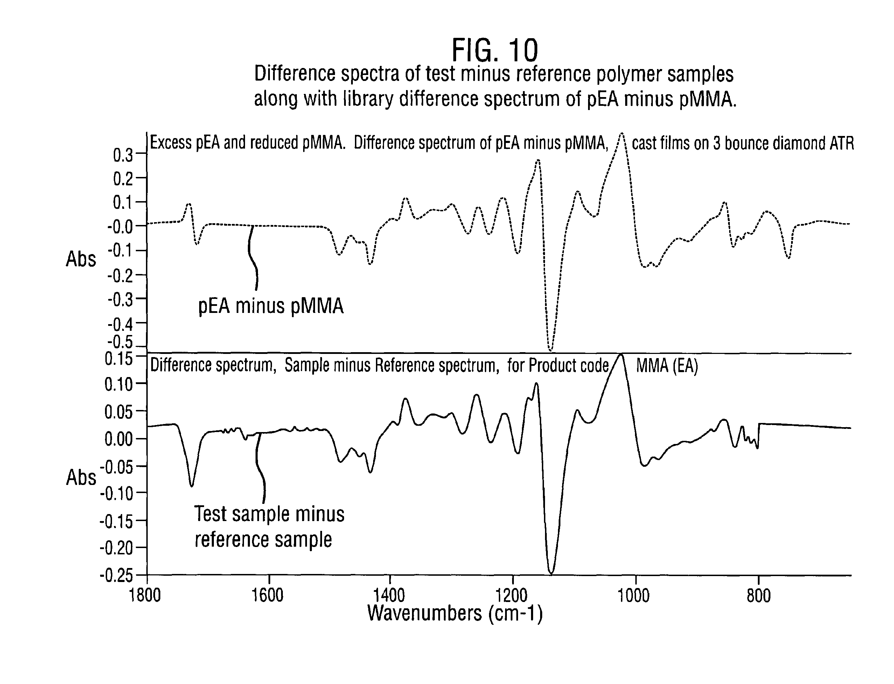

If the "Mischarge of Monomer" scenario button is chosen, the screen shown in Figure 9 is obtained. The scenario index is high, and the program correctly determines a switch of ethyl acrylate (EA) for MMA as the most likely cause. Figure 10 shows the difference spectra of a test sample minus a reference sample, along with homopolymer pEA minus homopolymer pMMA. The match is excellent, even for many of the subtle spectral features.

Example 4 Polymer prepared with impure monomer

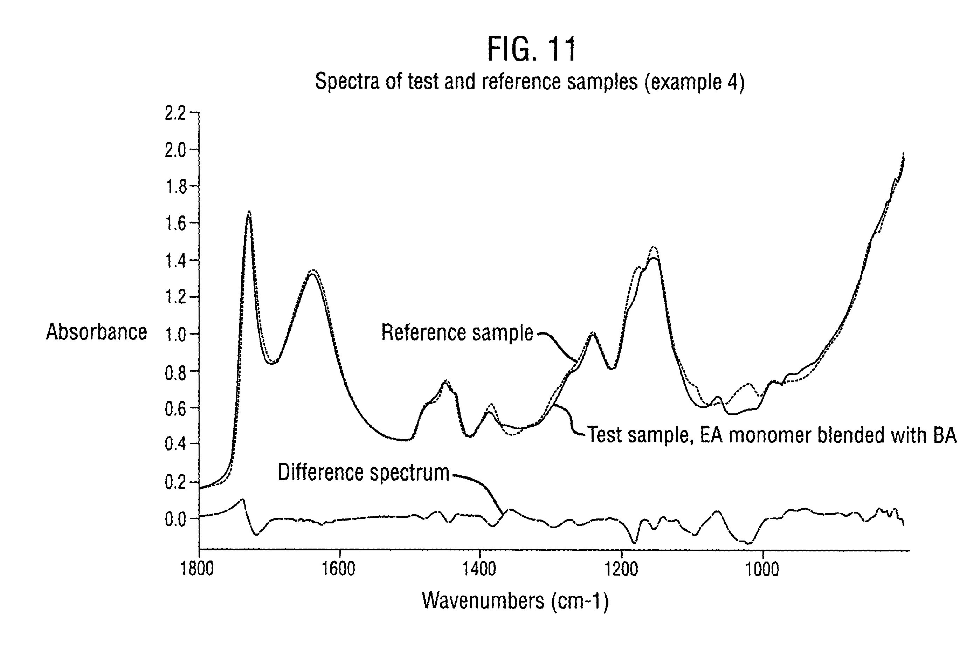

Figure 11 shows the spectra of a polymer prepared from an impure monomer, where the monomer was diluted with another monomer to simulate mischarge of a monomer or contamination by another monomer. The product failed the FTIR test method.

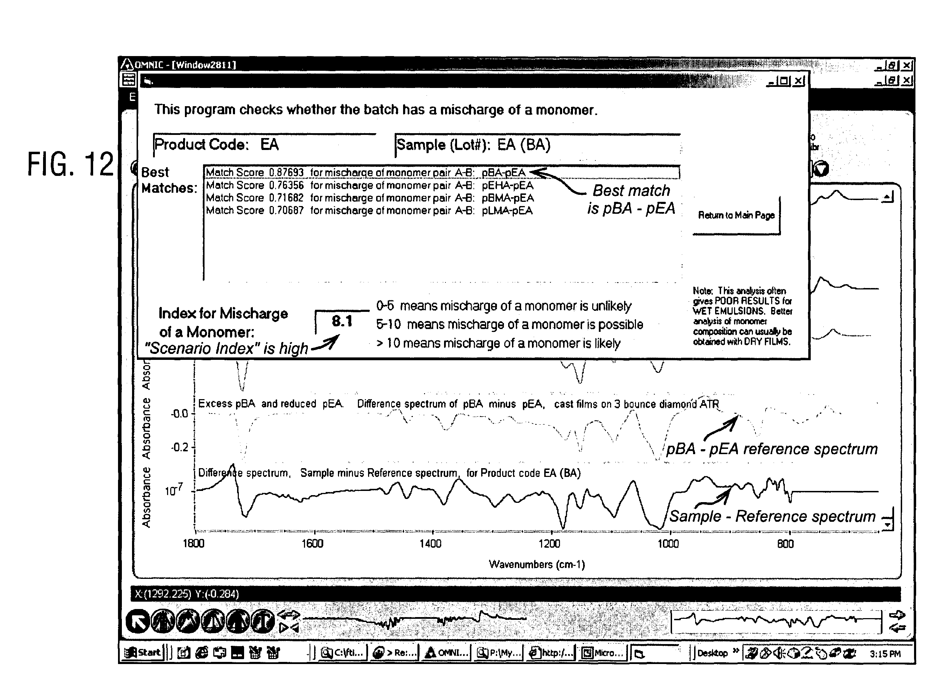

If "Mischarge of Monomer" scenario button is clicked, the screen shown in Figure 12 is obtained. The scenario index indicates this scenario is possible, and the program finds a switch of BA for EA as the most likely cause. This matches the scenario that was determined in a plant investigation after the product failed the FTIR test, and is due to contamination of the monomer storage tanks.

Figure 13 shows the difference spectra of a test sample minus reference sample along with homopolymer pBA minus homopolymer pEA. The match is pretty good, but some of the subtle spectral features are distorted, especially in the region from 1150-1200 cm-1. The differences are probably due to other compositional or structural differences in the product, or possibly in the reference spectra.

Example 5 Polymer X diluted with water to 40% solids (normally 50%)

Figure 14 shows the spectra of polymer X diluted to 40% solids by adding deionized (DI) water. The water peaks at 3300, 1640 and 600 cm-1 have higher intensity, while the polymer peaks are weaker.

Figure 15 shows the result of clicking the "Incorrect wt% Solids" button. The scenario index of is high (11.0), and the visual match of a test sample minus reference sample difference spectrum with (water minus polymer X) is visually quite good.

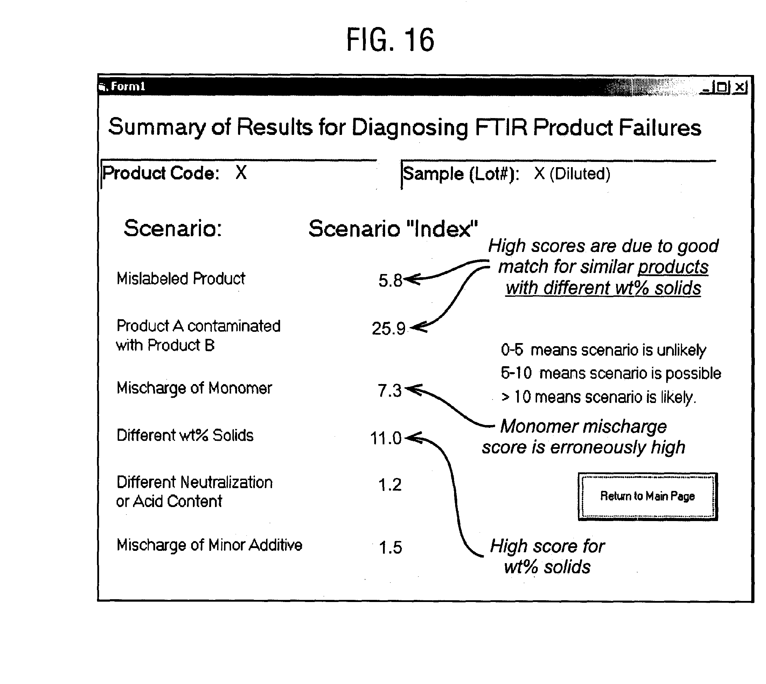

The summary page is shown in Figure 16. There is also a good match with "Mislabeled Product" and very high match for "Product A contaminated with Product B". These matches are both due to products which are similar to X but with lower wt% solids, for example, which is made at 46-47% solids. The monomer mischarge index is also rather high (7.3), with the best match to the pMMA minus pLMA difference spectrum. The erroneously good match here is due to the fact that the spectrum of pLMA is similar to that of pMMA, but somewhat weaker due to "dilution" of the ester groups by the lauryl chain. These results show a weakness in the method, and clearly indicate how the results must interpreted together with other data to form a coherent picture.

Example 6, Undercharge of raw material for polymer Z

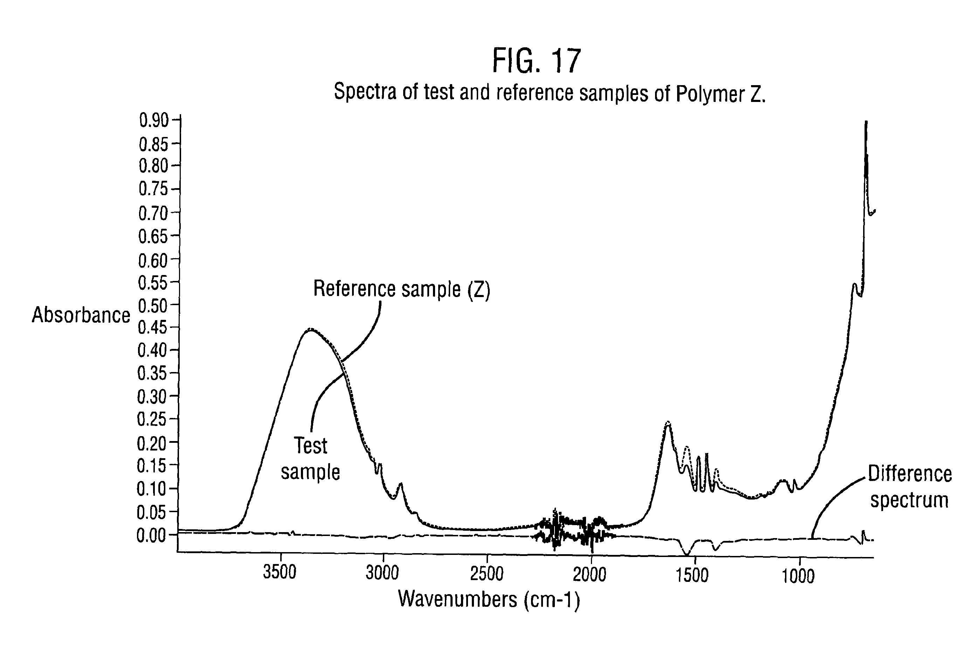

Figure 17 shows spectra of a reference sample and a test sample prepared to simulate undercharge of a raw material or reactant from the manufacture of polymer Z, with the difference spectrum shown below.

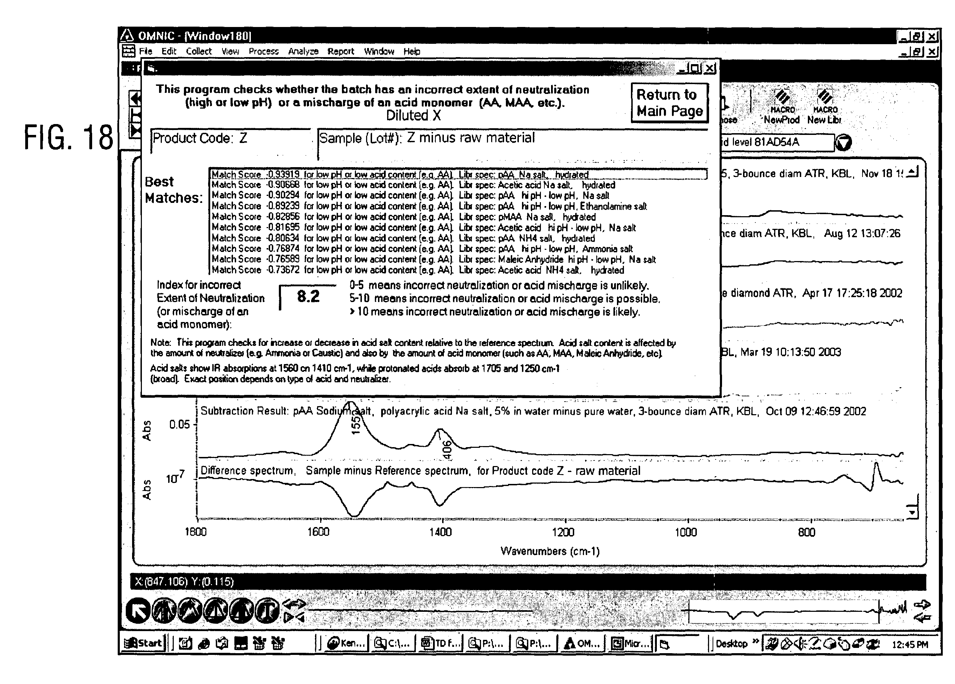

If the "Neutralization or Acid Level?" button is clicked, the screen shown in Figure 18 is obtained. The scenario index indicates that it is possible that a difference in acid salt level is the cause for the product failure.

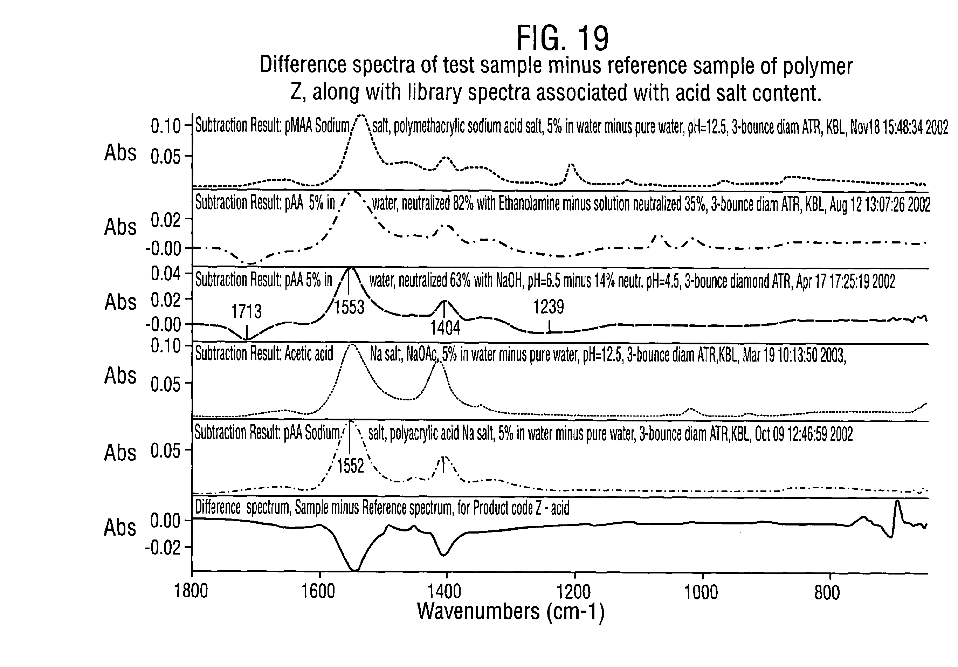

If the spectra displayed behind the Visual Basic screen is examined (Figure 19), it is seen that the difference spectrum matches very well to pAA Na salt, except that the peaks are negative instead of positive. This is because there is less acid salt in the failed sample compared to the reference material. The problem was eventually traced to an undercharge of a raw material, which is a copolymer containing acrylic acid and is the source for acid salt in the product.

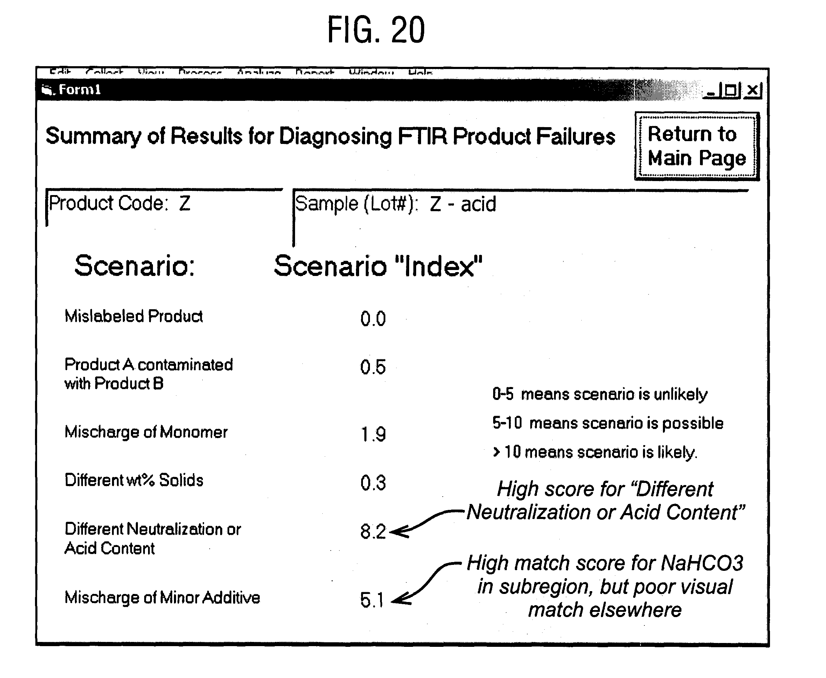

Figure 20 shows the summary page after evaluating each of the scenarios. Note that there is also a fairly high score for the "Minor Additive" scenario, because the spectral match within the region evaluated (900-1350 cm-1) is fairly high for $NaHCO_3$. However, if we examine the spectra outside this region from 1350-1700 cm-1, we can rule out this match. The results show the benefit of examining the spectra for a visual confirmation of the match, and also underscore the importance of evaluating the possibility of each scenario in combination with other data.

Example 7 Variable solvent levels in Polymer

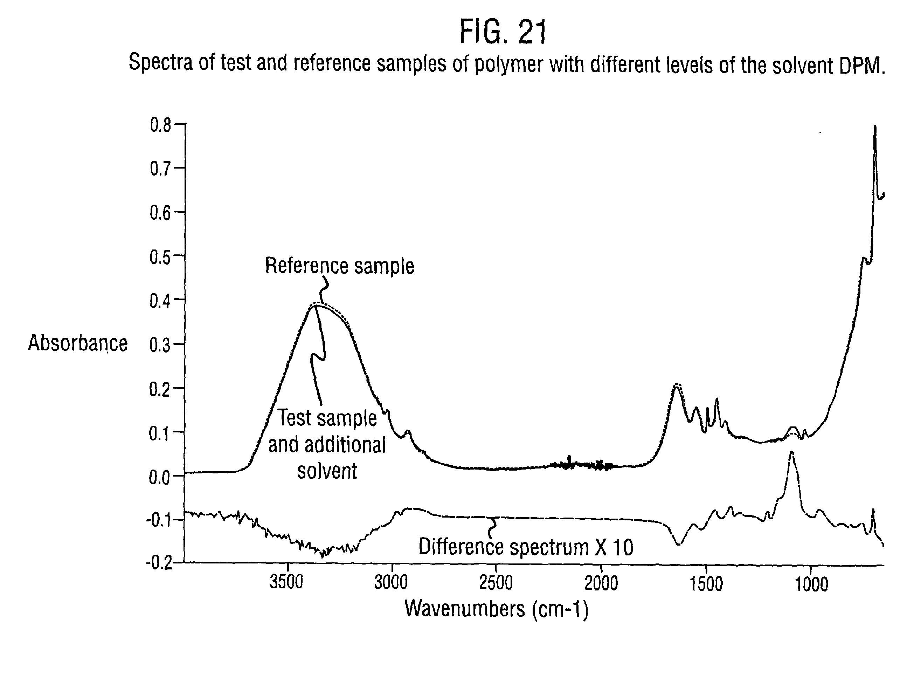

Figure 21 shows two spectra of a polymer, with different levels of DPM (dipropylene glycol monomethylether) solvent.

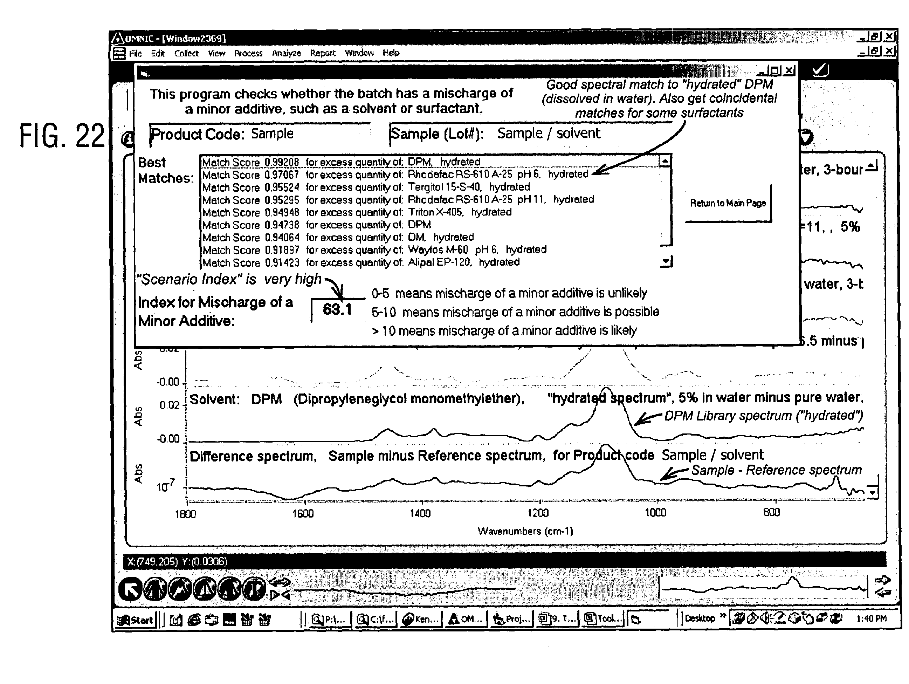

If the "Mischarge of Minor Additive" scenario button is chosen and clicked, the screen in Figure 22 is obtained. The scenario index is very high, and it identifies DPM as the most likely candidate. The spectral match is excellent for even the subtle features. Note that there are also good matches for some surfactants, which is due to the similarity in the C-O stretch feature of DPM compared to the $EO_x$ segments compared to DPM. The other scenarios do not have high indexes.

The success of the method in this case is due to the intense spectrum of DPM in the region from 900-1350 cm-1 relative to the weak spectrum of the major components water and polystyrene. Thus, the difference spectrum is very close to the spectrum of DPM.

Analysis of dry films

Changes in the wt% solids content of the product will cause a subtraction imbalance in the spectral contribution of the polymer and other additives. This will distort the difference spectrum, and will cause the method to fail if the subtraction imbalance is severe enough. The ATR method is also vulnerable to "apparent" wt% solids changes in samples where the true solids levels are very close, as confirmed by oven solids measurements. These changes are attributed to attraction or repulsion of the polymer particles by the ATR crystal surface.

This problem can often be solved by examining spectra of dried films. Using dried films also enhances the

**EP 1 550 854 A2**

signal/noise of the difference spectrum because the polymer features are stronger (typically by a factor of 2-4). For samples which form good films, the dried film method yields excellent results.

LIST OF FIGURES

Figure 1.      Spectra of polymer X and polymer Y products.
Figure 2.      Results screen after clicking "Mislabeled" button for spectra of polymers X and Y shown in Figure 1.
Figure 3.      Summary screen for mislabeling of polymer X as polymer Y.
Figure 4.      Spectra of X contaminated with Y and standard pure X.
Figure 5.      Results screen after clicking "Contaminated with another product?" button, for the spectra of pure and contaminated polymer X shown in Figure 4.
Figure 6.      Difference spectra displayed on screen after clicking "Contaminated with another product?" button, for pure and contaminated polymer X shown in Figure 4.
Figure 7.      Summary screen for contaminated polymer X shown in Figure 4.
Figure 8.      Spectra of test and reference polymer samples (Example 3).
Figure 9.      Results screen for polymer of Example 3 after clicking the "Mischarge of a Monomer?" scenario button.
Figure 10.     Difference spectra of test polymer sample minus reference polymer sample of Example 3, along with library difference spectrum of pEA minus pMMA.
Figure 11.     Spectra of test sample and reference sample of polymer (Example 4).
Figure 12.     Results screen for polymer of Example 4 after clicking the "Mischarge of a Monomer?" scenario button.

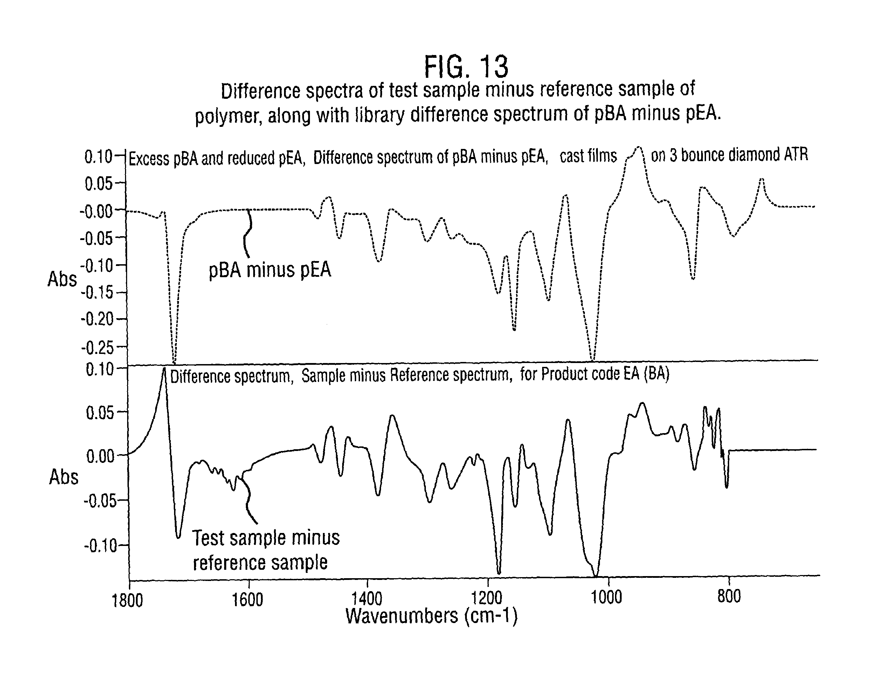

Figure 13.     Difference spectra of test polymer sample minus reference polymer, along with library difference spectrum of pBA minus pEA.

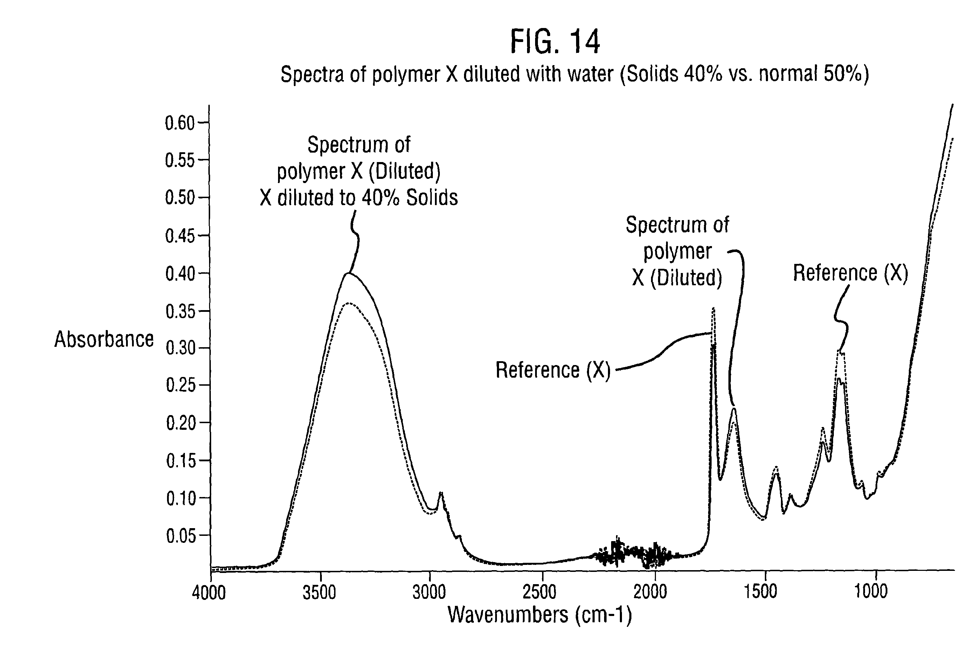

Figure 14.     Spectra of polymer X diluted with water (Solids 40% vs. normal 50%).

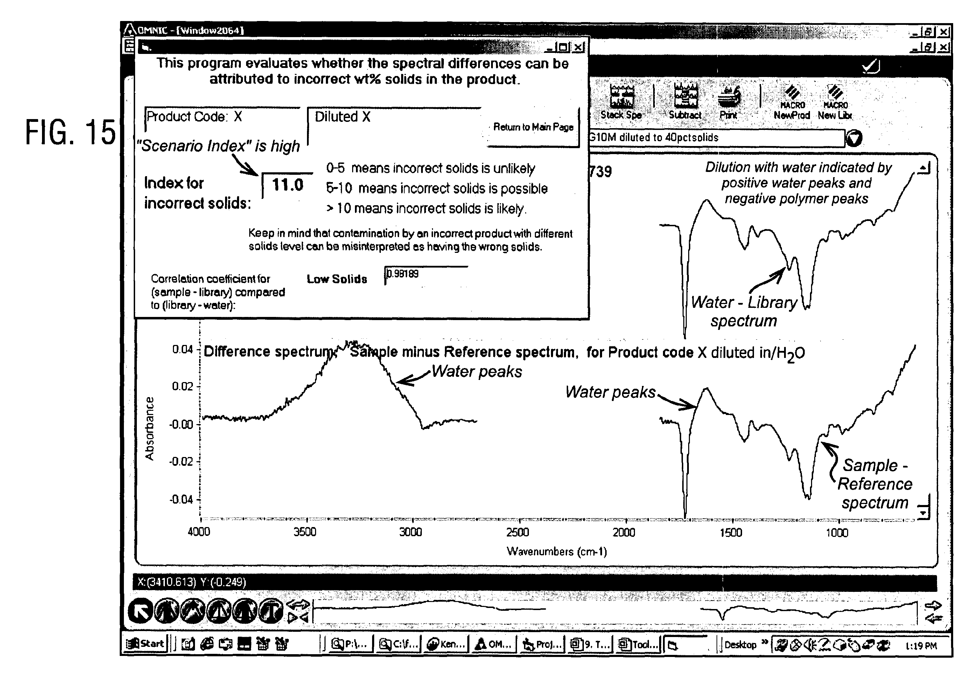

Figure 15.     Results screen after clicking "Incorrect Wt% Solids" button, for the spectrum of diluted polymer X shown in Figure 14.
Figure 16.     Summary screen for spectrum of diluted polymer X from Figure 7.
Figure 17.     Spectra of test sample and reference sample of Polymer Z.
Figure 18.     Results screen after clicking "Neutralization or Acid Level?" button, for the spectra of Polymer Z shown in Figure 17.
Figure 19.     Difference spectra of test sample minus a reference sample of polymer Z, along with library spectra associated with acid salt content.
Figure 20.     Summary page for polymer Z with mischarge of raw material (reactant).
Figure 21.     Spectra of test polymer sample and reference polymer having different levels of solvent DPM.
Figure 22.     Results screen after clicking "Mischarge of Minor Additive?" button, for the spectra of polymer shown in Figure 21.

**Claims**

1.  A method for diagnosing and identifying differences in chemical composition between one or more samples as compared to its corresponding standards comprising the steps of:

    (a) measuring spectra for one or more samples and its corresponding standard;
    (b) calculating a difference spectrum between each sample and its corresponding standard; and
    (c) comparing each difference spectrum with one or more libraries of difference spectra corresponding to specific scenarios, each scenario corresponding to one or more specific compositions of matter.

2.  The method according to claim 1, further comprising the step of evaluating a set of match scores from the comparison step to identify the scenario and its corresponding one or more compositions of matter responsible for the difference in composition.

3.  The method according to claim 1, wherein differences in chemical composition are due to scenarios selected from the group consisting of contaminants, mislabeled products, products contaminated with one or more other products, monomer mischarges, raw material mischarges, incorrect weight percentage of polymer product solids, incorrect degree of neutralization, mischarge of an additives including solvents, base, soaps, surfactants and other additives and combinations thereof.

4. The method according to claim 1, wherein Fourier transform infrared spectra of samples and corresponding standards are measured and difference spectra are stored and retrieved for comparison from one or more spectral libraries.

5. The method according to claim 1, wherein a computer program is used to calculate a match score for each difference spectrum.

6. The method according to claim 1, wherein spectra of samples and corresponding standards are measured using a diamond attenuated total reflectance (ATR) accessory.

7. The method according to claim 1, wherein each step is automated.

8. A method of evaluating quality control for any manufactured chemical product using the method of claim 1.

9. An infrared spectroscopic method for diagnosing and identifying differences in chemical composition between one or more samples as compared to its corresponding standards comprising the steps of:

> (a) measuring Fourier Transform Infrared spectra for one or more samples and its corresponding standard, using a technique that provides a reproducible optical path length selected from a attenuated total reflection accessory, a cuvette and plastic form;
> (b) calculating a difference spectrum between each sample and its corresponding standard, which is the spectrum resulting from a point by point subtraction of absorbance values;
> (c) comparing each difference spectrum with one or more libraries of difference spectra corresponding to specific scenarios, each scenario corresponding to one or more specific compositions of matter; and
> (d) evaluating a set of match scores from the comparison step to identify the scenario and its corresponding one or more compositions of matter responsible for the difference in composition.

10. A method for diagnosing and identifying contaminants in chemical composition between one or more samples as compared to its corresponding standards comprising the steps of:

> (a) measuring spectra for one or more samples and its corresponding standard;
> (b) calculating a difference spectrum between each sample and its corresponding standard, which is a point by point subtraction based on a specific parameter unique to the spectra;
> (c) comparing each difference spectrum with one or more libraries of difference spectra corresponding to specific contaminant scenarios, each scenario corresponding to one or more specific contaminants; and
> (d) evaluating a set of match scores from the comparison step to identify the scenario and its corresponding one or more contaminants responsible for the difference in composition.

# FIG. 1

Spectra of polymer X and polymer Y products

Polymer Y

Polymer X

Absorbance

Wavenumbers (cm-1)

EP 1 550 854 A2

FIG. 2

OMNIC - [Window1321]

File   Edit   Collect   View   Process   Analyze   Report   Window   H

Default - Absorbance 16 scans

MACRO
Run Samp      Col Bkg   Col Smp      Open   Save As

Product = 76954, Lot = 0081JD35, Operator = CMA, Da

0.5  Product

0.5  Product

0.5  Product

0.5  Product

0.5  Product = X

0.5  Product = Y

Abs

1800          1600          1400          1200          1000          800

Wavenumbers (cm-1)

X:(1489.330) Y:(0.366)

**This program searches the product library spectra
to see if the sample may have been mislabled.**

Product Code:  73739          Sample (Lot#):  0081JD35

Match Scores:

Return to Main Page

Intended Product:  0.99012

Best Matches:

| Product Code Y | Match Score 0.99987 |
| Product Code X | Match Score 0.99975 |
| Product Code | Match Score 0.99915 |
| Product Code | Match Score 0.99866 |
| Product Code | Match Score 0.99793 |
| Product Code | Match Score 0.99735 |
| Product Code | Match Score 0.99611 |
| Product Code | Match Score 0.99358 |
| Product Code | Match Score 0.99275 |
| Product Code | Match Score 0.99271 |

*Program identifies
product X and
others as better
matches*

Index for mislabeling:  **9.9**

*"Scenario Index"
is pretty high*

0-5  means mislabeling is unlikely
5-10  means mislabeling is possible
> 10 means mislabeling is likely

Mislabeling is likely if the best match score is much higher
than the score for the intended product.

*Best matches are displayed*

*Sample spectrum*

Start         P:\My...   C:\fti...   Kenn...   OMNI...   Proje...   9. To...          Desktop                11:53 AM

# FIG. 3

**Summary of Results for Diagnosing FTIR Product Failures**

Product Code: **X**   Sample (Lot#): **Y**

| Scenario: | Scenario "Index" | |
|---|---|---|
| Mislabeled Product | 9.9 | *"Scenario Index" is pretty high for mislabeled product* |
| Product A contaminated with Product B | 178.8 | *"Scenario Index" is also high for Product Contamination and Monomer Mischarge* |
| Mischarge of Monomer | 5.6 | 0-5 means scenario is unlikely<br>5-10 means scenario is possible<br>> 10 means scenario is likely. |
| Different wt% Solids | 0.2 | |
| Different Neutralization or Acid Content | 0.7 | Return to Main Page |
| Mischarge of Minor Additive | 0.8 | |

EP 1 550 854 A2

FIG. 4

Spectra of X contaminated with Y and standard pure X.

**FIG. 5**

This program checks whether the sample is contaminated with another product.

Product Code: **X**       Sample (Lot#): **X(Y)**

Best Matches:

Contaminant Product Code 52177  Match Score 0.94663
Contaminant Product Code 76954  Match Score 0.93458
Contaminant Product Code 67292  Match Score 0.87603
Contaminant Product Code 66618  Match Score 0.81033
Contaminant Product Code 71946  Match Score 0.79533
Contaminant Product Code 64269  Match Score 0.77877
Contaminant Product Code 77339  Match Score 0.73195

*Program identifies contaminants Y and others as better matches*

Return to Main Page

Index for contaminating product X with product Y:   **9.4**

0-5 means contamination with another product is unlikely
5-10 means contamination with another product is possible
> 10 means contamination with another product is likely

Keep in mind that a sample with incorrect solids level can be misinterpreted as contamination by products with a different solids level.

Note: This program is only effective in diagnosing the contamination of Product A at the normal wt% solids with Product B at the normal wt% solids. If the solids level of either product is abnormal, then the problem can only be diagnosed with spectra of dry films.

*Best matches for difference spectra are displayed*

-0.1

Difference spectrum, Sample minus Reference spectrum, for Product code X

$10^{-7}$

*Sample minus reference spectrum*

Absorbance

1800        1600        1400        1200        1000        800

Wavenumbers (cm-1)

X:(652.611) Y:(0.007)

Start    |  P:\My...  |  C:\fti...  |  Kenn...  |  OMNI...  |  Proje...  |  9. To...  |       |  Desktop »       12:37 PM

EP 1 550 854 A2

## FIG. 6

Prod A minus Prod B
difference spectra match
well to samp minus ref.

Prod A minus Prod B
difference spectra match
well to samp minus ref.

Sample - reference spectrum.

Wavenumbers (cm-1)

# FIG. 7

**Form1**  ▬▬▬ _ロ×

## Summary of Results for Diagnosing FTIR Product Failures

Product Code:  **X**                    Sample  **X(Y)**

### Scenario:                Scenario "Index"

| | |
|---|---|
| Mislabeled Product | **1.0** |
| Product A contaminated with Product B | **9.4** |
| Mischarge of Monomer | **4.9** |
| Different wt% Solids | **0.3** |
| Different Neutralization or Acid Content | **0.7** |
| Mischarge of Minor Additive | **0.7** |

*"Scenario Index" is pretty high for Product Contamination*

0-5  means scenario is unlikely
5-10  means scenario is possible
> 10 means scenario is likely.

*Also expect high score for Monomer Mischarge, but this analysis often does not work well (yet?).*
*Dry film spectra usually give better results*

Return to Main Page

EP 1 550 854 A2

FIG. 8

Spectra of test and reference polymer samples (Example 3)

FIG. 9

OMNIC - [Window151]

This program checks whether the batch has a mischarge of a monomer.

Product Code: MMA          Sample (Lot#): MMA (EA)

Best Matches:
Match Score 0.93066 for mischarge of monomer pair A-B: pEA-pMMA
Match Score 0.89749 for mischarge of monomer pair A-B: pBA-pMMA
Match Score 0.84903 for mischarge of monomer pair A-B: pBA-pBMA
Match Score 0.81632 for mischarge of monomer pair A-B: pEHA-pMMA
Match Score 0.76364 for mischarge of monomer pair A-B: pEHA-pBMA
Match Score 0.75082 for mischarge of monomer pair A-B: pEA-pBMA

Best match is pEA - pMMA

Return to Main Page

"Scenario Index" is high
Index for Mischarge of a Monomer:

14.4

0-5 means mischarge of a monomer is unlikely
5-10 means mischarge of a monomer is possible
> 10 means mischarge of a monomer is likely

Note: This analysis often gives POOR RESULTS for WET EMULSIONS. Better analysis of monomer composition can usually be obtained with DRY FILMS.

0.0  Excess pBA and reduced pMMA. Difference spectrum of pBA minus pMMA, cast films on 3 bounce diamond ATR

Abs

-0.5

Excess pEA and reduced pMMA. Difference spectrum of pEA minus pMMA, cast films on 3 bounce diamond ATR

Abs  0.0

-0.5

pEA - pMMA reference spectrum

Difference spectrum, Sample minus Reference spectrum, for Product code MMA (EA)

Abs  0.0

-0.2

Sample - Reference spectrum

1800          1600          1400          1200          1000          800

Wavenumbers (cm-1)

X:(668.275) Y:(0.175)

Start   C:\fti...   Kenn...   OMNI...   C:\fti...   Micro...   Desktop   10:15 AM

## FIG. 10

Difference spectra of test minus reference polymer samples
along with library difference spectrum of pEA minus pMMA.

Excess pEA and reduced pMMA. Difference spectrum of pEA minus pMMA, cast films on 3 bounce diamond ATR

pEA minus pMMA

Difference spectrum, Sample minus Reference spectrum, for Product code MMA (EA)

Test sample minus
reference sample

Wavenumbers (cm-1)

Abs

Abs

# FIG. 11

Spectra of test and reference samples (example 4)

EP 1 550 854 A2

**FIG. 12**

OMNIC - [Window2811]

This program checks whether the batch has a mischarge of a monomer.

Product Code: EA          Sample (Lot#): EA (BA)

Best Matches:
Match Score 0.87693 for mischarge of monomer pair A-B: pBA-pEA  ← *Best match is pBA - pEA*
Match Score 0.76356 for mischarge of monomer pair A-B: pEHA-pEA
Match Score 0.71682 for mischarge of monomer pair A-B: pBMA-pEA
Match Score 0.70687 for mischarge of monomer pair A-B: pLMA-pEA

Return to Main Page

**Index for Mischarge of a Monomer:**
"Scenario Index" is high

**8.1**

0-5 means mischarge of a monomer is unlikely
5-10 means mischarge of a monomer is possible
> 10 means mischarge of a monomer is likely

Note: This analysis often gives POOR RESULTS for WET EMULSIONS. Better analysis of monomer composition can usually be obtained with DRY FILMS.

Excess pBA and reduced pEA   Difference spectrum of pBA minus pEA,   cast films on 3 bounce diamond ATR

*pBA - pEA reference spectrum*

Difference spectrum,   Sample minus Reference spectrum,   for Product code EA (BA)

$10^{-7}$

*Sample - Reference spectrum*

-0.0

-0.2

Absorbance

1800          1600          1400          1200          1000          800

Wavenumbers (cm-1)

X:(1292.225) Y:(-0.284)

Start | C:\fti... | > Re:... | OMNI... | P:\My... | http:/... | Micro... | Desktop » | 3:15 PM

EP 1 550 854 A2

# FIG. 13

Difference spectra of test sample minus reference sample of polymer, along with library difference spectrum of pBA minus pEA.

Excess pBA and reduced pEA, Difference spectrum of pBA minus pEA, cast films on 3 bounce diamond ATR

pBA minus pEA

Difference spectrum, Sample minus Reference spectrum, for Product code EA (BA)

Test sample minus reference sample

Abs

Wavenumbers (cm-1)

EP 1 550 854 A2

# FIG. 14

### Spectra of polymer X diluted with water (Solids 40% vs. normal 50%)

EP 1 550 854 A2

# FIG. 15

**This program evaluates whether the spectral differences can be attributed to incorrect wt% solids in the product.**

Product Code: X                    Diluted X

Return to Main Page

"Scenario Index" is high

Index for incorrect solids:     **11.0**

- 0-5  means incorrect solids is unlikely
- 5-10  means incorrect solids is possible
- > 10 means incorrect solids is likely.

Keep in mind that contamination by an incorrect product with different solids level can be misinterpreted as having the wrong solids.

Correlation coefficient for (sample - library) compared to (library - water):     **Low Solids**     0.98189

Stack Spe   Subtract   Print   MACRO NewProd   MACRO New Libr.

G10M diluted to 40pctsolids

Dilution with water indicated by positive water peaks and negative polymer peaks

Water - Library spectrum

Difference spectrum, Sample minus Reference spectrum, for Product code X diluted in/$H_2O$

Water peaks

Water peaks

Sample - Reference spectrum

Absorbance

0.04
0.02
-0.00
-0.02
-0.04

4000   3500   3000   2500   2000   1500   1000

Wavenumbers (cm-1)

X:(3410.613) Y:(-0.249)

Start | P:\... | C:\f... | Ken... | OM... | Proj... | 9. T... | Tool... | Desktop   1:19 PM

EP 1 550 854 A2

# FIG. 16

**Form1** _|□| X|

## Summary of Results for Diagnosing FTIR Product Failures

**Product Code:** X

**Sample (Lot#):** X (Diluted)

### Scenario:                Scenario "Index"

*High scores are due to good match for similar <u>products</u> with different <u>wt% solids</u>*

Mislabeled Product                5.8

Product A contaminated          25.9
with Product B

0-5 means scenario is unlikely
5-10 means scenario is possible
> 10 means scenario is likely.

Mischarge of Monomer            7.3

*Monomer mischarge score is erroneously high*

Different wt% Solids              11.0

Different Neutralization          1.2
or Acid Content

Return to Main Page

Mischarge of Minor Additive      1.5

*High score for wt% solids*

# FIG. 17

Spectra of test and reference samples of Polymer Z.

FIG. 18

OMNIC - [Window180]

File   Edit   Collect   View   Process   Analyze   Report   Window   Help

This program checks whether the batch has an incorrect extent of neutralization (high or low pH) or a mischarge of an acid monomer (AA, MAA, etc.).

Diluted X

**Return to Main Page**

Product Code: Z                    Sample (Lot#): Z minus raw material

Best Matches:
```
Match Score  -0.93919  for low pH or low acid content (e.g. AA).  Libr spec: pAA  Na salt,  hydrated
Match Score  -0.90668  for low pH or low acid content (e.g. AA).  Libr spec: Acetic acid Na salt,  hydrated
Match Score  -0.90294  for low pH or low acid content (e.g. AA).  Libr spec: pAA  hi pH - low pH, Na salt
Match Score  -0.89239  for low pH or low acid content (e.g. AA).  Libr spec: pAA  hi pH - low pH, Ethanolamine salt
Match Score  -0.82856  for low pH or low acid content (e.g. AA).  Libr spec: pMAA  Na salt,  hydrated
Match Score  -0.81695  for low pH or low acid content (e.g. AA).  Libr spec: Acetic acid  hi pH - low pH, Na salt
Match Score  -0.80634  for low pH or low acid content (e.g. AA).  Libr spec: pAA  NH4 salt,  hydrated
Match Score  -0.76874  for low pH or low acid content (e.g. AA).  Libr spec: pAA  hi pH - low pH, Ammonia salt
Match Score  -0.76589  for low pH or low acid content (e.g. AA).  Libr spec: Maleic Anhydride  hi pH - low pH, Na salt
Match Score  -0.73672  for low pH or low acid content (e.g. AA).  Libr spec: Acetic acid  NH4 salt,  hydrated
```

Index for incorrect Extent of Neutralization (or mischarge of an acid monomer):   **8.2**

0-5 means incorrect neutralization or acid mischarge is unlikely.
5-10 means incorrect neutralization or acid mischarge is possible.
> 10 means incorrect neutralization or acid mischarge is likely.

Note: This program checks for increase or decrease in acid salt content relative to the reference spectrum. Acid salt content is affected by the amount of neutralizer (e.g. Ammonia or Caustic) and also by the amount of acid monomer (such as AA, MAA, Maleic Anhydride, etc).

Acid salts show IR absorptions at 1560 cn 1410 cm-1, while protonated acids absorb at 1705 and 1250 cm-1 (broad). Exact position depends on type of acid and neutralizer.

Subtraction Result: pAA Sodium salt,  polyacrylic acid Na salt, 5% in water minus pure water, 3-bounce diam ATR, KBL,  Oct 09 12:46:59 2002

Difference spectrum,  Sample minus Reference spectrum,  for Product code Z - raw material

1800        1600        1400        1200        1000        800
Wavenumbers (cm-1)

X:(847.106) Y:(0.115)

Start    Ken...   C:\...   TD f...   P:\...   P:\...   OM...   Micr...    Desktop    12:45 PM

EP 1 550 854 A2

# FIG. 19

Difference spectra of test sample minus reference sample of polymer Z, along with library spectra associated with acid salt content.

Subtraction Result: pMAA Sodium salt, polymethacrylic sodium acid salt, 5% in water minus pure water, pH=12.5, 3-bounce diam ATR, KBL, Nov18 15:48:34 2002

Subtraction Result: pAA 5% in water, neutralized 82% with Ethanolamine minus solution neutralized 35%, 3-bounce diam ATR, KBL, Aug 12 13:07:26 2002

Subtraction Result: pAA 5% in water, neutralized 63% with NaOH, pH=6.5 minus 14% neutr. pH=4.5, 3-bounce diamond ATR, Apr 17 17:25:19 2002

1713  1553  1404  1239

Subtraction Result: Acetic acid Na salt, NaOAc, 5% in water minus pure water, pH=12.5, 3-bounce diam ATR,KBL, Mar 19 10:13:50 2003,

Subtraction Result: pAA Sodium salt, polyacrylic acid Na salt, 5% in water minus pure water, 3-bounce diam ATR,KBL, Oct 09 12:46:59 2002

1552

Difference spectrum, Sample minus Reference spectrum, for Product code Z - acid

Wavenumbers (cm-1)

# FIG. 20

Edit  Collect  View  Process  Analyze  Report  Window  Help

**Form1**  _ □ x

## Summary of Results for Diagnosing FTIR Product Failures   | Return to Main Page |

Product Code:  Z

Sample (Lot#):  Z - acid

### Scenario:          Scenario "Index"

| Scenario | Index |
|----------|-------|
| Mislabeled Product | 0.0 |
| Product A contaminated with Product B | 0.5 |
| Mischarge of Monomer | 1.9 |
| Different wt% Solids | 0.3 |
| Different Neutralization or Acid Content | 8.2 |
| Mischarge of Minor Additive | 5.1 |

0-5 means scenario is unlikely

5-10 means scenario is possible

> 10 means scenario is likely.

*High score for "Different Neutralization or Acid Content"*

*High match score for NaHCO3 in subregion, but poor visual match elsewhere*

# FIG. 21

Spectra of test and reference samples of polymer with different levels of the solvent DPM.

EP 1 550 854 A2

FIG. 22

EP 1 550 854 A2

OMNIC - [Window2369]

File  Edit  Collect  View  Process  Analyze  Report  Window  Help

This program checks whether the batch has a mischarge of a minor additive, such as a solvent or surfactant.

Good spectral match to "hydrated" DPM (dissolved in water). Also get coincidental matches for some surfactants

Product Code: Sample

Sample (Lot#):  Sample / solvent

Best Matches:

Match Score  0.99208  for excess quantity of:  DPM,  hydrated
Match Score  0.97067  for excess quantity of:  Rhodafac RS-610 A-25  pH 6,  hydrated
Match Score  0.95524  for excess quantity of:  Tergitol 15-S-40,  hydrated
Match Score  0.95295  for excess quantity of:  Rhodafac RS-610 A-25  pH 11,  hydrated
Match Score  0.94948  for excess quantity of:  Triton X-405,  hydrated
Match Score  0.94738  for excess quantity of:  DPM
Match Score  0.94064  for excess quantity of:  DM,  hydrated
Match Score  0.91897  for excess quantity of:  Wayfos M-60  pH 6,  hydrated
Match Score  0.91423  for excess quantity of:  Alipal EP-120,  hydrated

Return to Main Page

"Scenario Index" is  very high

Index for Mischarge of a Minor Additive:

63.1

0-5  means mischarge of a minor additive is unlikely
5-10  means mischarge of a minor additive is possible
> 10  means mischarge of a minor additive is likely

Solvent:  DPM  (Dipropyleneglycol monomethylether),     "hydrated spectrum", 5% in water minus pure water,
DPM Library spectrum ("hydrated")

Difference spectrum,  Sample minus Reference spectrum,  for Product code  Sample / solvent
Sample - Reference spectrum

Abs
-0.00
0.02
-0.00
10⁷

1800        1600        1400        1200        1000        800

Wavenumbers (cm-1)

X:(749,205)  Y:(0.0306)

Start     Desktop     1:40 PM